(19) Europäisches Patentamt
European Patent Office
Office européen des brevets

(11) Veröffentlichungsnummer: **0 148 120**
**B1**

# (12) EUROPÄISCHE PATENTSCHRIFT

(45) Veröffentlichungstag der Patentschrift: **23.11.88**

(51) Int. Cl.⁴: **C 09 B 56/02,** D 06 P 3/32, D 06 P 3/30

(21) Anmeldenummer: **84810605.0**

(22) Anmeldetag: **10.12.84**

## (54) Unsymmetrische 1:2-Chromkoplexfarbstoffe.

(30) Priorität: **15.12.83 CH 6690/83**

(43) Veröffentlichungstag der Anmeldung: **10.07.85 Patentblatt 85/28**

(45) Bekanntmachung des Hinweises auf die Patenterteilung: **23.11.88 Patentblatt 88/47**

(84) Benannte Vertragsstaaten: **CH DE FR GB IT LI**

(56) Entgegenhaltungen:
**EP-A-0 066 230**
**EP-A-0 072 501**
**FR-A-2 392 087**
**FR-A-2 399 466**

**Die Akte enthält technische Angaben, die nach dem Eingang der Anmeldung eingereicht wurden und die nicht in dieser Patentschrift enthalten sind.**

(73) Patentinhaber: **CIBA- GEIGY AG, Klybeckstrasse 141, CH- 4002 Basel (CH)**

(72) Erfinder: **Beffa, Fabio, Dr., Burgstrasse 38, CH-4125 Riehen (CH)**

**EP 0 148 120 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Es sind bereits z. B. aus der EP-A-0 066 230 oder FR-A-2 392 087 asymmetrische 1 : 2 - Chromkomplexfarbstoffe, die bis zu drei Sulfogruppen im Molekül aufweisen, bekannt. Gegenstand der vorliegenden Erfindung sind 1 : 2 - Chromkomplexfarbstoffe der Formel I

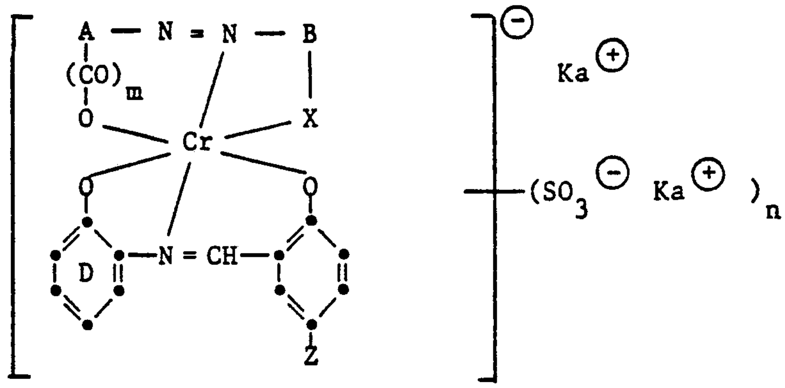

(I)

worin

A den Rest einer Diazokomponente der Benzol- oder Naphthalinreihe, welche die Hydroxy- oder Carboxygruppe in o-Stellung zur Azogruppe trägt,
B den Rest einer Kupplungskomponente, welche die Gruppe X in Nachbarstellung zur Azogruppe trägt,
X Sauerstoff oder einen Rest der Formel -NR-, wobei R Wasserstoff oder $C_1$-$C_4$-Alkyl bedeutet,
Z Wasserstoff oder eine Gruppe -N=N-Ar, wobei
Ar einen gegebenenfalls substituierten Arylrest, welcher höchstens eine Sulfogruppe trägt,
m 0 oder 1,
n 4, 5, 6 oder 7 und
$Ka^{\oplus}$ ein Kation bedeutet, wobei der Ring D weitere Substituenten tragen kann.

In den erfindungsgemässen Chromkomplexfarbstoffen der obigen Formel I kann der Rest A noch einen oder mehrere weitere Substituenten tragen, z. B. niedermolekulares Alkyl oder Alkoxy, Halogen, wie z. B. Chlor oder Brom, Nitro, Cyano, Sulfo, Carboxy, Phosphono, Alkylsulfonyl, wie z. B. Methylsulfonyl, Sulfamide, wie z. B. Sulfamid oder N-Methylsulfamid, oder Acylamino. Unter niedermolekularen Alkyl- oder Alkoxygruppen sind in dieser Anmeldung generell solche mit 1 bis 6, vorzugsweise 1 bis 2 C-Atomen zu verstehen und mit "Acylamino" werden niedermolekulare Alkanoylamino-, Alkylsulfonylamino- und Alkoxycarbonylaminoreste sowie Aroylamino- und Arylsulfonylaminoreste bezeichnet.

Der Rest A leitet sich beispielsweise von folgenden Aminen ab: Anthranilsäure, 4- oder 5-Chloranthranilsäure, 4- oder 5-Sulfoanthranilsäure, 2-Amino-3-naphthoesäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor-, 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Sulfonamido-2-amino-1-hydroxybenzol, 1-Hydroxy-2-aminobenzol-4-sulfoanthranilid, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 2-Amino-1-hydroxybenzol-4- oder -5-sulfonsäure, 4-Nitro-2-amino-1-hydroxybenzol-6-sulfonsäure, 6-Nitro-2-amino-1-hydroxybenzol-4-sulfosäure, 4-Chlor-2-amino-1-hydroxybenzol-6-sulfosäure, 1-Amino-2-hydroxynaphthalin-4-sulfosäure, 1-Amino-2-hydroxy-6-nitronaphthalin-4-sulfosäure, 1-Amino-2-hydroxy-6-chlornaphthalin-4-sulfosäure, 1-Amino-2-hydroxynaphthalin-4,6-disulfosäure, 2-Amino-1-hydroxybenzol-4,6-disulfosäure.

Statt der oben genannten Amine mit Hydroxygruppen kommen für A auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5-sulfosäure, oder tosyliertes 1-Hydroxy-2-aminobenzol, wobei die Methoxy- oder 0-Tosylgruppe vor oder bei der Metallisierung in eine OH-Gruppe umgewandelt wird. Verbindungen mit diesen Gruppen werden vor allem dann eingesetzt, wenn die entsprechenden 1-Hydroxy-2-amino-verbindungen schlecht kuppeln.

In bevorzugten Farbstoffen der Formel I bedeutet A den Rest eines 1-Hydroxy-2-aminobenzols, welcher gegebenenfalls durch Halogen, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Halogen, wie Brom oder insbesondere Chlor, Nitro oder Sulfo substituiert ist.

Der Rest B leitet sich vorzugsweise von folgenden Gruppen von Kupplungskomponenten ab: gegebenenfalls durch niedermolekulares Alkyl oder Alkoxy, Dialkylamino, oder Acylamino substituierte, in o-Stellung kuppelnde Phenole, wobei Acylamino $C_1$-$C_4$-Alkanoylamino-, $C_1$-$C_4$-Alkylsulfonylamino-, $C_1$-$C_4$-Alkoxycarbonylamino-, Arolylamino- oder Arylsulfonylaminoreste bedeutet; Naphthole, die gegebenenfalls mit

$C_1$-$C_4$-Alkyl oder Alkoxy, Chlor, Amino, Acylamino oder Sulfo substituiert sind, wobei Acylamino dieselbe Bedeutung hat, die vorne angegeben ist; 5-Pyrazolone oder 5-Aminopyrazole, vorzugsweise solche, die in 1-Stellung einen gegebenenfalls mit Chlor, Nitro, $C_1$-$C_4$-Alkyl- oder -Alkoxygruppen oder Sulfogruppen substituierten Phenyl- oder Naphthylrest besitzen und in 3-Stellung eine $C_1$-$C_4$-Alkyl- oder Carboxygruppe, insbesondere eine Methylgruppe aufweisen; Naphthylamine, die gegebenenfalls mit Sulfo-, Sulfonamido- oder Sulfongruppen substituiert sind; Acetessigsäureamide, vor allem Acetessigsäureanilide, und Benzoylessigsäureanilide, die im Anilidkern gegebenenfalls mit Chlor, Brom, Nitro, $C_1$-$C_4$-Alkyl- oder Alkoxy- oder Sulfogruppen substituiert sein können; 6-Hydroxy-3-cyano- oder 6-Hydroxy-3-carbonamido-4-alkyl-2-pyridone, die in 1-Stellung durch gegebenenfalls substituiertes $C_1$-$C_4$-Alkyl, z. B. Methyl, Isopropyl, β-Hydroxyethyl, β-Aminoethyl oder γ-Isopropoxypropyl oder durch Phenyl substituiert sind, und in 4-Stellung eine $C_1$-$C_4$-Alkyl-gruppe, insbesondere Methyl, tragen können, oder Hydroxychinoline.

Beispiele solcher Kupplungskomponenten sind:

2-Naphthol, 1-Naphthol, 1-Acetylamino-7-naphthol, 1-Propionylamino-7-naphthol, 1-Carboxymethoxyamino-7-naphthol, 1-Carboethoxyamino-7-naphthol, 1-Carbopropoxyamino-7-naphthol, 6-Acetyl-2-naphthol, 2-Naphthol-3-, -4-, -5-, -6-, -7- oder -8-sulfosäure, 1-Naphthol-3-, -4- oder -5-sulfosäure, 1-Naphthol-3,6- oder -4,8-disulfosäure, 2-Naphthol-6,8-disulfosäure, 4-Methyl-1-naphthol, 4-Methoxy-1-naphthol, 4-Acetyl-1-naphthol, 5,8-Dichlor-1-naphthol, 5-Chlor-1-naphthol, 2-Naphthylamin, 2-Naphthylamin-1-sulfosäure, 1-Naphthylamin-4- oder -5-sulfosäure, 2-Aminonaphthalin-6-sulfosäure, 2-Aminonaphthalin-5-sulfosäure, 6-Methylsulfonyl-2-aminonaphthalin, 1-Phenyl-3-methylpyrazol-5-on, 1-Phenyl-5-pyrazolon-3-carbonsäureamid, 1-(2'-, 3'- oder 4'-Methylphenyl)-3-methylpyrazol-5-on, 1-(2'- 3'-oder 4'-Sulfophenyl)-3-methylpyrazol-5-on, 1-(2'-Chlor-5'-sulfophenyl)-3-methylpyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2'-, 3'- oder 4'-Nitrophenyl)-3-methylpyrazol-5-on, 1-(2',5'- oder 3',4'-Dichlorphenyl)-3-methylpyrazol-5-on, 1-(2',5'-Dichlor-4'-sulfophenyl)-3-methylpyrazol-5-on, 1-(2'-, 3'- oder 4'-Sulfophenyl)-3-methyl-5-aminopyrazol, 1-Phenyl-3-methyl-5-aminopyrazol, 1-(2'-Chlor-5'-sulfophenyl)-3-methyl-5-aminopyrazol, Acetoacetanilid, Acetoacetanilid-4-sulfosäure, Acetoacet-o-anisidid, Acetoacet-o-toluidid, Acetoaceto-o-chloranilid, Acetoacet-m-xylidid, Tetralol, 4-Methylphenol, 3-Dialkylaminophenole, besonders 3-Dimethylamino- und 3-Diethylaminophenol, 4-Butylphenol, vorzugsweise 4-tert.-Butylphenol, 4-Amylphenol, insbesondere 4-t-Amylphenol, 2-Isopropyl-4-methylphenol, 2- oder 3-Acetylamino-4-methylphenol, 2-Methoxycarbonylamino-4-methylphenol, 2-Ethoxycarbonylamino-4-methylphenol und 3,4-Dimethylphenol, 1-Methyl-3-cyano-4-ethyl-6-hydroxypyridon, 1-Methyl-3-cyano-4-methyl-6-hydroxypyridin, 1-Phenyl-3-carbonamido-4-methyl-6-hydroxypyridon, 1-Ethyl-4-hydroxy-2-chinolon.

Vorzugsweise stellt die Kupplungskomponente B ein gegebenenfalls durch Amino und/oder Sulfo substituiertes 1- oder 2-Naphthol, 1- oder 2-Naphthylamin, gegebenenfalls substituiert durch Sulfo, p-Alkyl($C_1$-$C_6$)-phenol, 1-Phenyl-3-methyl-5-pyrazolon oder Acetessigsäureanilid dar, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann.

Im Azomethinfarbstoff der 1 : 2 - Chromkomplexe der oben angegebenen Formel I kann der Ring D weitere Substituenten tragen.

Vorzugsweise ist der Ring D unsubstituiert oder ein- oder zweimal durch Sulfo, Nitro, Halogen, $C_1$-$C_4$-Alkyl, $C_1$-$C_4$-Alkoxy, $C_1$-$C_4$-Alkylsulfonyl oder Sulfonamid substituiert.

Der Rest D leitet sich beispielsweise von folgenden Aminen ab:

2-Amino-1-hydroxybenzol, 4-Chlor- und 4,6-Dichlor-2-amino-1-hydroxybenzol, 4- oder 5-Nitro-2-amino-1-hydroxybenzol, 4-Chlor- und 4-Methyl-6-nitro-2-amino-1-hydroxybenzol, 6-Acetylamino- und 6-Chlor-4-nitro-2-amino-1-hydroxybenzol, 4-Sulfonamido-2-amino-1-hydroxybenzol, 4-Methylsulfonyl-2-amino-1-hydroxybenzol, 4-Methoxy-2-amino-1-hydroxybenzol, 4-Methoxy-5-chlor-2-amino-1-hydroxybenzol, 4-Methyl-2-amino-1-hydroxybenzol, 4-Chlor- und 4-Methyl-5-nitro-2-amino-1-hydroxybenzol, 3,4,6-Trichlor-2-amino-1-hydroxybenzol, 4,6-Dinitro-2-amino-1-hydroxybenzol, 2-Amino-1-hydroxybenzol-4- oder -5-sulfosäure, 2-Amino-1-hydroxybenzol-4,6-disulfosäure, 4-Nitro-2-amino-1-hydroxybenzol-6-sulfosäure, 6-Nitro-2-amino-1-hydroxybenzol-4-sulfosäure, 6-Chlor-2-amino-1-hydroxybenzol-4-sulfosäure, 4-Chlor-2-amino-1-hydroxybenzol-6-sulfosäure, 4-Methylsulfonyl-5-nitro-2-amino-1-hydroxybenzol, 4-Methylsulfonyl-6-nitro-2-amino-1-hydroxybenzol, 6-Methyl-2-amino-1-hydroxybenzol-4-sulfosäure.

In besonders bevorzugten Farbstoffen ist der Ring D ein 1-Hydroxy-2-aminobenzol, welches durch Sulfo substituiert ist und gegebenenfalls ausserdem durch eine weitere Sulfogruppe, durch Nitro, Halogen, wie Brom oder vor allem Chlor, Methyl oder Methoxy weitersubstituiert ist.

Als Aldehyd für den Azomethinfarbstoff kommt 2-Hydroxybenzaldehyd in Frage oder vorzugsweise 2-Hydroxybenzaldehyd, der in p-Stellung zur Hydroxygruppe eine Gruppe -N = N-Ar aufweist.

Ar bedeutet den Rest eines gegebenenfalls substituierten heterocyclischen oder carbocyclischen aromatischen Amins, welcher höchstens eine Sulfogruppe trägt. Vorzugsweise handelt cs sich um einen Benzol- oder Naphthalinrest, insbesondere um einen Benzol- oder Naphthalinrest, der eine Sulfogruppe trägt, wobei der Benzolrest ausserdem gegebenenfalls weitersubstituiert ist durch Halogen, wie Brom oder vor allem Chlor, $C_1$-$C_4$-Alkyl, vor allem Methyl, $C_1$-$C_4$-Alkoxy, vor allem Methoxy, oder Nitro.

Als Amine Ar-$NH_2$ kommen z. B. in Frage:

Anilin, 1-Aminobenzol-2-sulfonsäure, 1-Aminobenzol-3-sulfonsäure, 1-Aminobenzol-4-sulfonsäure, 1-Amino-4-chlorbenzol-3-sulfonsäure, 1-Amino-4-methylbenzol-3-sulfonsäure, 1-Amino-4-methoxybenzol-3-sulfonsäure, 1-Amino-4-nitrobenzol-2-sulfonsäure, 1-Amino-2-nitrobenzol-4-sulfonsäure, 1- oder 2-Aminonaphthalin, 1-Aminonaphthalin-2-, -3-, -4-, -5-, -6-, -7-oder -8-sulfonsäure sowie 2-Aminonaphthalin-1-, -5-, -6-, -7- oder -8-sulfonsäure.

Die Chromkomplexfarbstoffe der Formel I enthalten 4 bis 7, vorzugsweise 4 oder 5 Sulfogruppen.

m bedeutet 1 oder vorzugsweise 0.

$Ka^{\oplus}$ bedeutet vorzugsweise Lithium, Kalium oder vor allem Natrium. Ausserdem kann $Ka^{\oplus}$ ein Ammoniumkation oder das Ammoniumsalz eines organischen Amins sein.

Bevorzugte erfindungsgemässe Farbstoffe entsprechen der Formel II

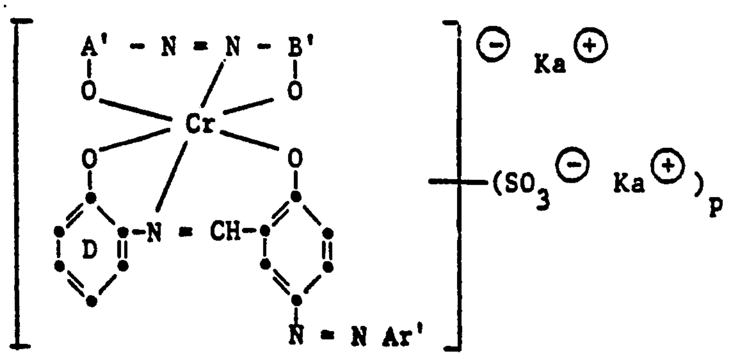

(II)

worin

A' den Rest eines 1-Hydroxy-2-aminobenzols, welcher gegebenenfalls durch Halogen, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Chlor, Nitro oder Sulfo substituiert ist,

B' ein gegebenenfalls durch Amino und/oder Sulfo substituiertes 1- oder 2-Naphthol, 1- oder 2-Naphthylamin, gegebenenfalls substituiert durch Sulfo, p-Alkyl($C_1$-$C_6$)-phenol, 1-Phenyl-3-methyl-5-pyrazolon oder Acetessigsäureanilid bedeutet, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann,

Ar' einen Naphthalinrest, der eine Sulfogruppe trägt, oder einen Benzolrest, der eine Sulfogruppe trägt und ausserdem gegebenenfalls weitersubstituiert ist durch Chlor, Methyl, Methoxy oder Nitro,

p 4 oder 5 und

$Ka^{\oplus}$ ein Kation bedeutet, wobei der Ring

D eine Sulfogruppe trägt und ausserdem gegebenenfalls weitersubstituiert ist durch eine weitere Sulfogruppe, Nitro, Chlor, Methyl oder Methoxy.

Die erfindungsgemässen Farbstoffe können nach an sich bekannten Methoden hergestellt werden, beispielsweise indem man den 1 : 1 - Chromkomplex des Azofarbstoffes herstellt und diesen dann mit dem Arylazo-Azomethinfarbstoff oder vorzugsweise mit einem Gemisch des entsprechenden Amins und Aldehyds umsetzt.

Die Herstellung des 1 : 1 - Chromkomplexes wird nach an sich bekannten Methoden, vorzugsweise in saurer Lösung mit Chrom-III-salzen durchgeführt. Anschliessend wird der 1 : 1 - Chromkomplex in schwach saurem, neutralem oder schwach alkalischem Medium zum 1 : 2 - Chromkomplex umgesetzt.

Die nach dem obigen Verfahren erhältlichen neuen Metallkomplexfarbstoffe der Formel I werden in Form ihrer Salze, insbesondere Alkali-, vor allem Natrium- oder Lithiumsalze, oder auch Ammoniumsalze oder Salze von organischen Aminen mit positiv geladenem Stickstoffatom isoliert und eignen sich zum Färben und Bedrucken verschiedener stickstoffhaltiger Stoffe, gegebenenfalls in Gegenwart eines Egalisierhilfsmittels, vor allem aber zum Färben von Leder.

Man erhält orange oder braune bis olive Färbungen mit guten Echtheiten, insbesondere Licht- und Nassechtheiten.

Die bevorzugte Verwendung der erfindungsgemässen Farbstoffe liegt im Färben von Pelzen oder Leder, wobei alle Ledersorten geeignet sind, z. B. Chromleder, nachgegerbtes Leder oder Velourleder von Ziege, Rind oder Schwein. Die erfindungsgemässen Farbstoffe eignen sich besonders zum Färben von Velourleder, da sie gut egalisieren und gut eindringen.

Die nachfolgenden Beispiele dienen der Erläuterung der Erfindung, ohne sie darauf zu beschränken. Teile bedeuten Gewichtsteile und Prozente Gewichtsprozente. Die Temperaturen sind in Grad Celsius angegeben.

**Beispiel 1**

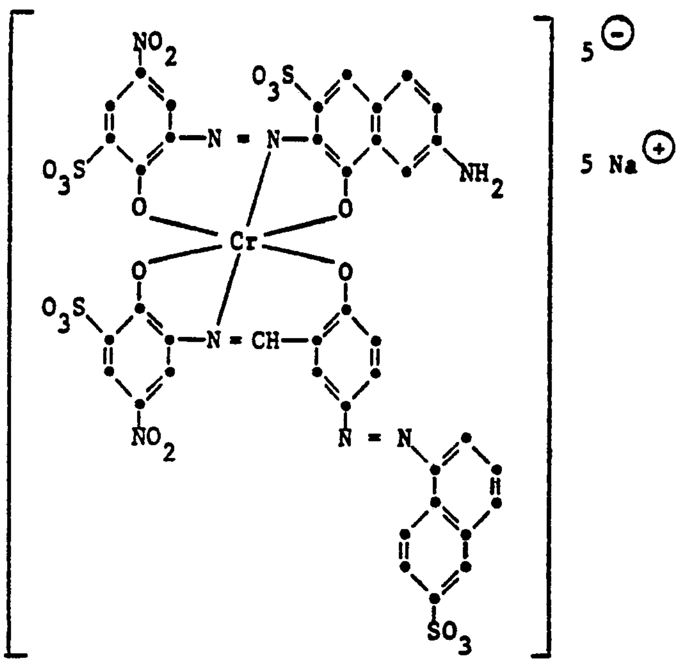

In 500 Teilen Wasser suspendiert man 53,4 Teile der komplexen Chromverbindung vom Typus 1 Atom Chrom: 1 Molekül Farbstoff, welche 5,2 Teile Chrom und 48,4 Teile Monoazofarbstoff aus diazotierter 4-Nitro-2-amino-1-hydroxybenzol-6-sulfonsäure und 2-Amino-8-hydroxynaphthalin-6-sulfonsäure enthält, mit 23,4 Teilen 4-Nitro-2-amino-1-hydroxybenzol-6-sulfonsäure und 35,6 Teilen des Monoazofarbstoffs aus diazotierter 1-Aminonaphthalin-6-sulfonsäure und Salicylaldehyd.

Das Reaktionsgemisch wird auf 80 bis 85° erwärmt, mit Natriumhydroxid wird der pH-Wert auf 7 bis 7,5 gestellt und das Reaktionsgemisch so lange bei dieser Temperatur und konstantem pH gehalten, bis die Ausgangsprodukte nicht mehr nachweisbar sind.

Nach beendeter Reaktion wird der Farbstoff durch Eindampfen isoliert. Er stellt ein dunkles Pulver dar, das sich in Wasser mit oliver Farbe löst und Leder in oliven Tönen von guten Echtheiten färbt.

**Beispiel 2**

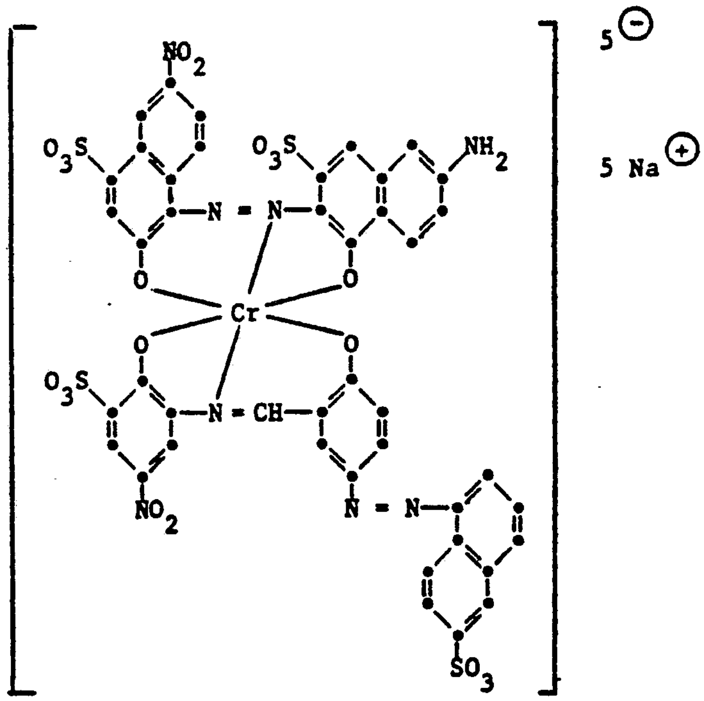

Der 1 : 1 - Chromkomplex, der 53,4 Teile des Farbstoffes aus diazotierter 6-Nitro-1-amino-2-hydroxynaphthalin-4-sulfonsäure und 2-Amino-5-hydroxynaphthalin-7-sulfonsäure sowie 5,2 Teile Chrom enthält, wird in 600 Teile Wasser eingetragen und mit 23,4 Teilen 4-Nitro-2-amino-1-hydroxybenzol-6-sulfonsäure und 35,6 Teilen des Monoazofarbstoffs aus diazotierter 1-Aminonaphthalin-6-sulfonsäure und Salicylaldehyd versetzt. Das Reaktionsgemisch wird hierauf auf 80 bis 85° erwärmt, mit Natriumhydroxid auf pH 7 gestellt und so lange bei dieser Temperatur und konstantem pH gehalten bis die Ausgangsprodukte verschwunden sind. Nach beendeter Reaktion wird der Farbstoff durch Sprühtrocknen isoliert.

Man erhält ein dunkles Pulver, das sich in Wasser mit grünoliver Farbe löst und Leder in oliven Tönen von guten Echtheiten färbt.

**Beispiel 3**

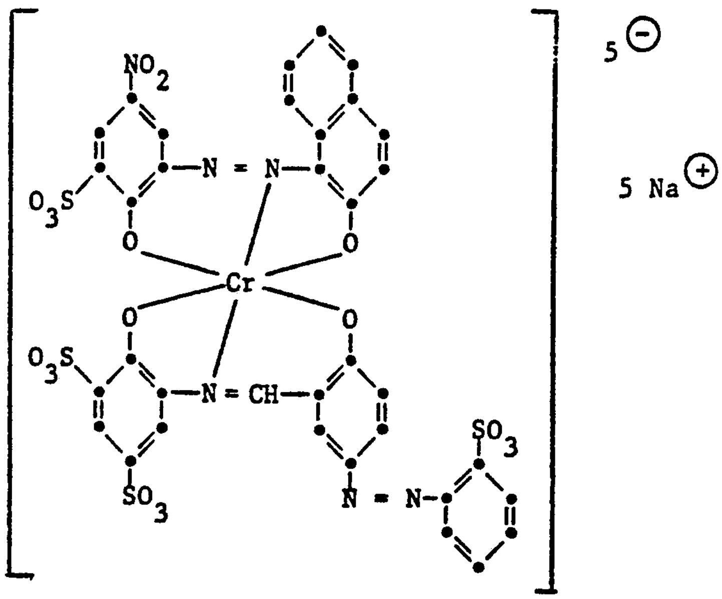

In 500 Teilen Wasser suspendiert man 43,9 Teile der komplexen Chromverbindung vom Typus 1 Atom Chrom: 1 Molekül Farbstoff, welche 5,2 Teile Chrom und 38,9 Teile Monoazofarbstoff aus diazotierter 4-Nitro-2-amino-1-hydroxybenzol-6-sulfonsäure und 2-Hydroxynaphthalin enthält, mit 26,9 Teilen 2-Amino-1-hydroxybenzol-4,6-disulfonsäure und 30,6 Teilen des Monoazofarbstoffs aus diazotierter 1-Aminobenzol-2-sulfonsäure und Salicylaldehyd. Das Reaktionsgemisch wird hierauf auf 80 bis 85° erwärmt, mit Natriumhydroxid auf pH 7 bis 7,5 gestellt und so lange bei dieser Temperatur und konstantem pH gehalten, bis die Ausgangsprodukte verschwunden sind. Nach beendeter Reaktion wird der Farbstoff durch Eindampfen isoliert.

Man erhält ein dunkles Pulver, das sich in Wasser mit brauner Farbe löst und Leder in echten braunen Tönen färbt.

Arbeitet man wie in den Beispielen 1 bis 3 beschrieben, verwendet jedoch den 1 : 1 - Chromkomplex des in der folgenden Tabelle in Spalte 2 aufgeführten Azofarbstoffes und setzt diesen mit dem in Spalte 3 aufgeführten Azomethinfarbstoff, bzw. mit dem diesen bildenden Amin und Aldehyd um, so erhält man 1 : 2 - Chromkomplexe, welche Leder in der in Spalte 4 angegebenen Nuance färben.

**Tabelle**

| N° | Azofarbstoff | Azomethinfarbstoff | Nuance |
|---|---|---|---|
| 1 | 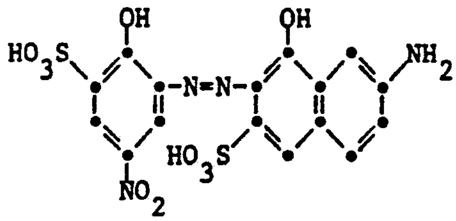 | 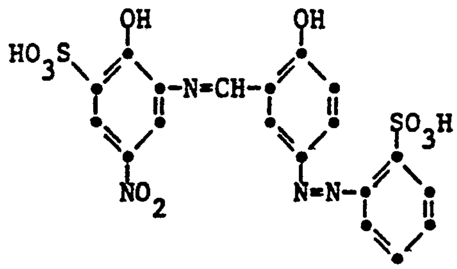 | olive |
| 2 | do | 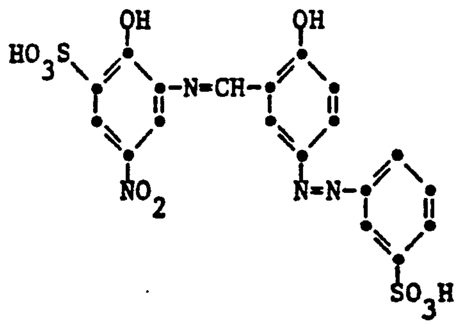 | olive |
| 3 | do | 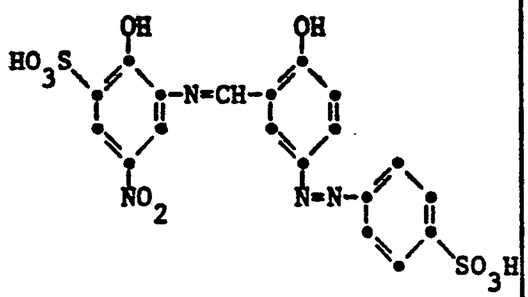 | olive |
| 4 | do | 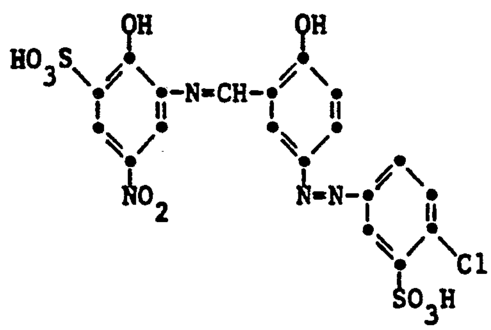 | olive |
| 5 | do | 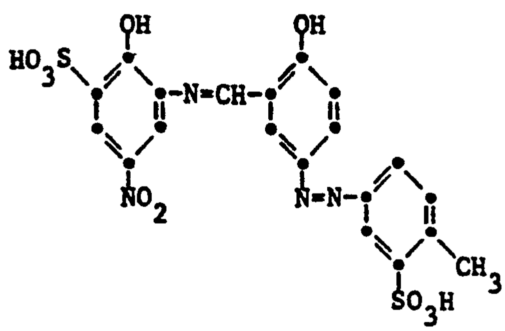 | olive |

| N° | Azofarbstoff | Azomethinfarbstoff | Nuance |
|---|---|---|---|
| 6 | 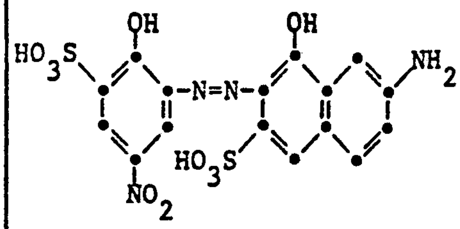 | 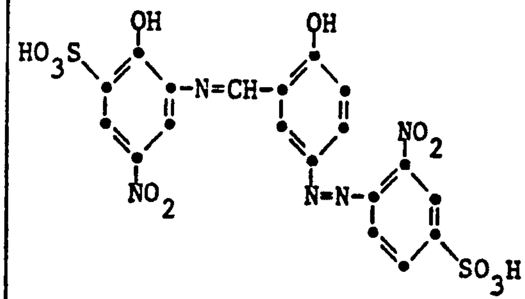 | olive |
| 7 | do | 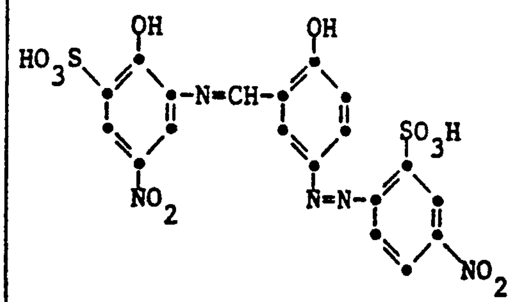 | olive |
| 8 | 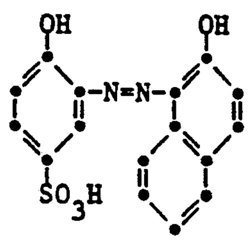 | 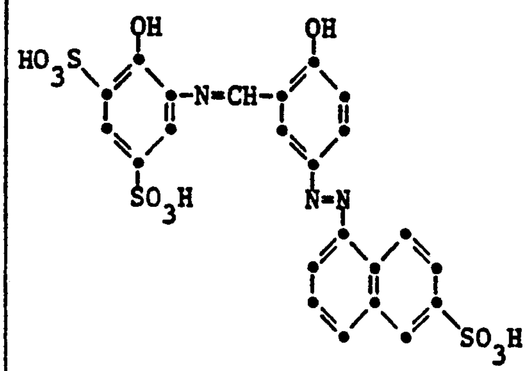 | braun |
| 9 | do | 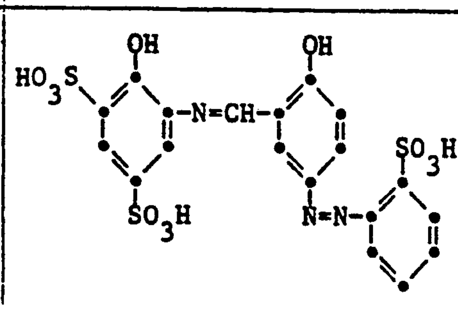 | braun |
| 10 | 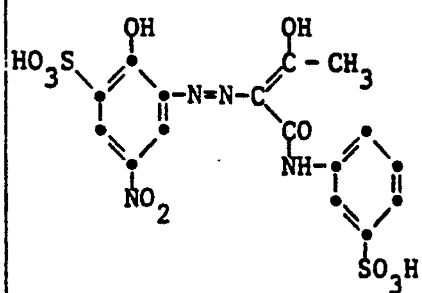 | 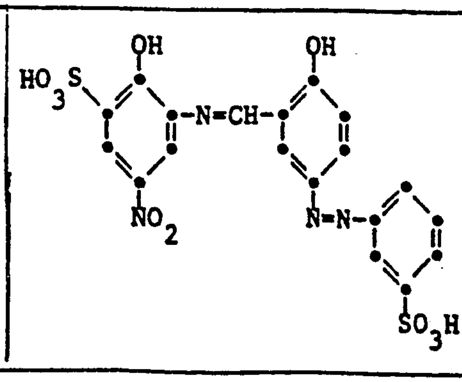 | gelb-stichig orange |

| N° | Azofarbstoff | Azomethinfarbstoff | Nuance |
|---|---|---|---|
| 11 | 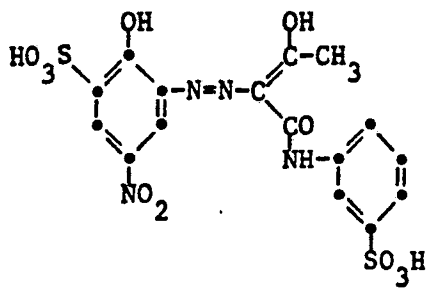 | 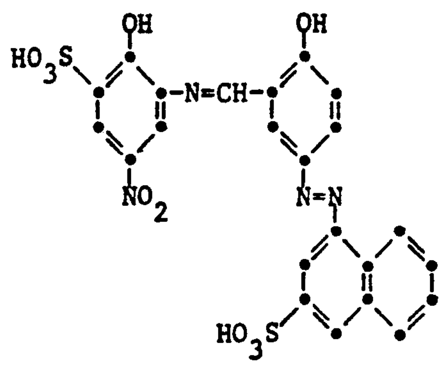 | gelb-stichig orange |
| 12 | 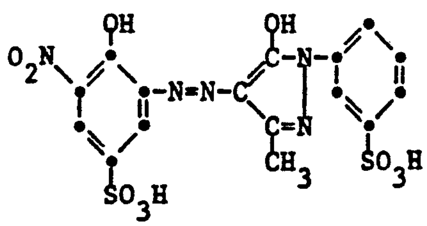 | do | braun-stichig orange |
| 13 | do | 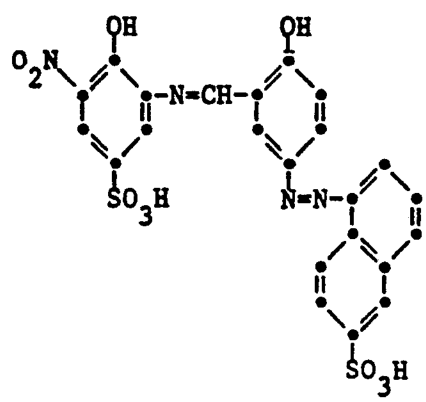 | braun-stichig orange |
| 14 | 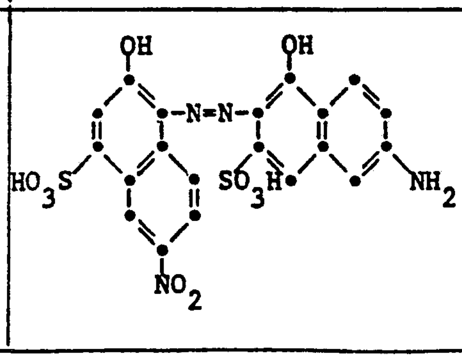 | 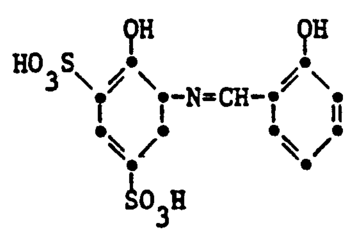 | olive |

| N° | Azofarbstoff | Azomethinfarbstoff | Nuance |
|---|---|---|---|
| 15 | 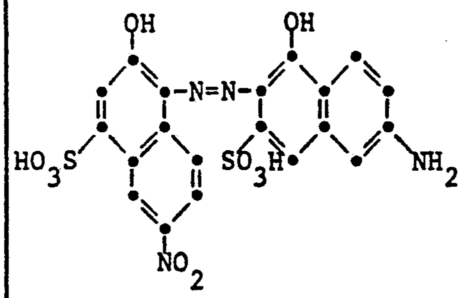 | 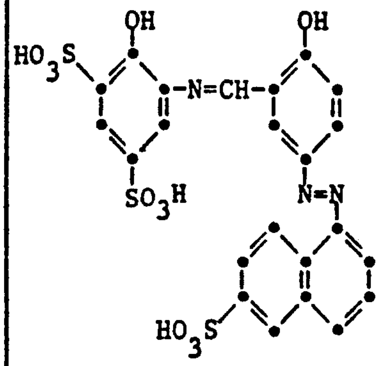 | olive |
| 16 | do | 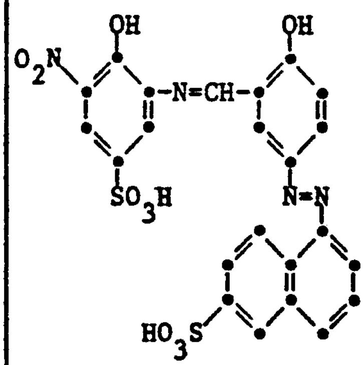 | braun-stichig olive |
| 17 | 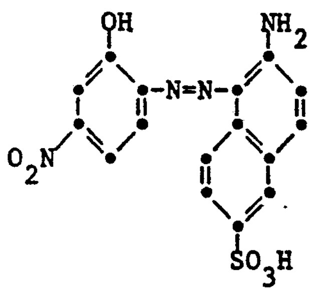 | 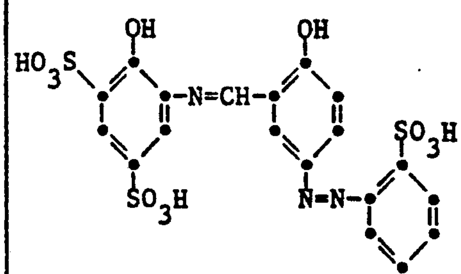 | olive |
| 18 | 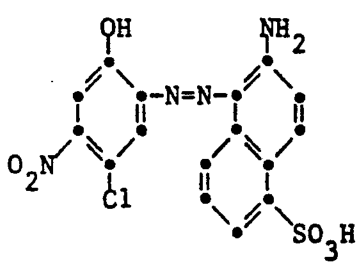 | do | olive |

| N° | Azofarbstoff | Azomethinfarbstoff | Nuance |
|---|---|---|---|
| 19 | 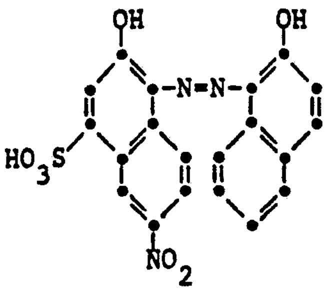 | 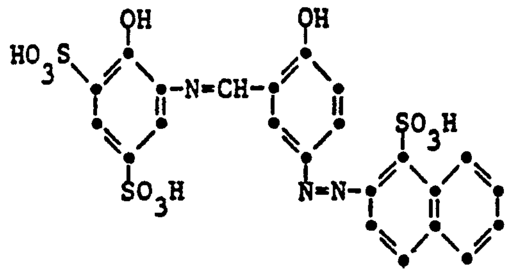 | braun-stichig olive |
| 20 | do | 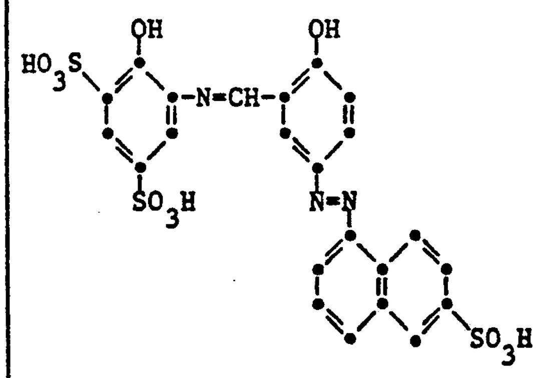 | braun-stichig olive |
| 21 | 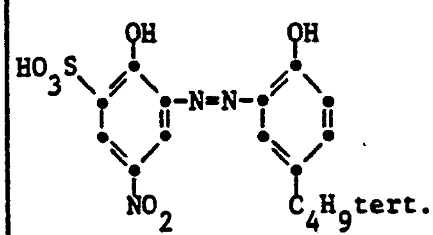 | 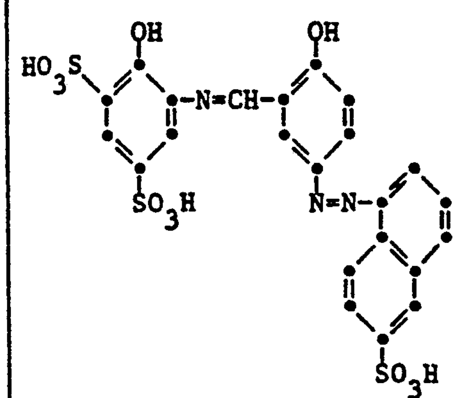 | braun |
| 22 | do | 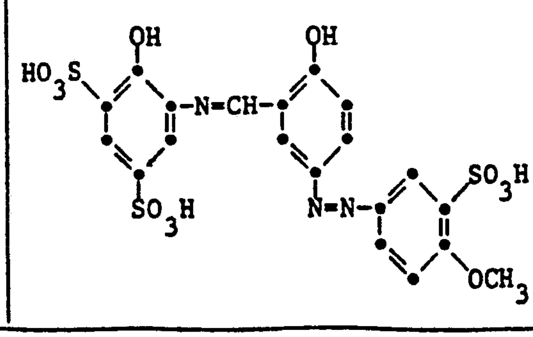 | braun |

| N° | Azofarbstoff | Azomethinfarbstoff | Nuance |
| --- | --- | --- | --- |
| 23 | 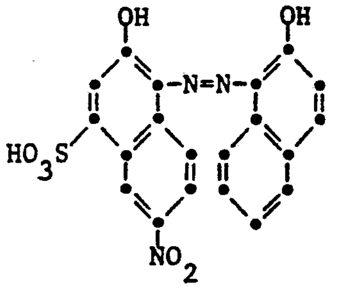 | 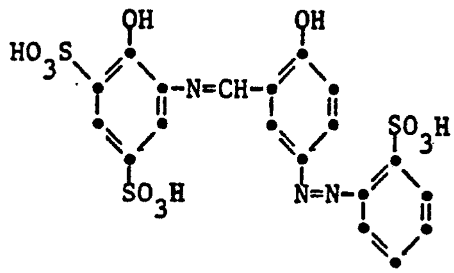 | braun-stichig olive |
| 24 | do | 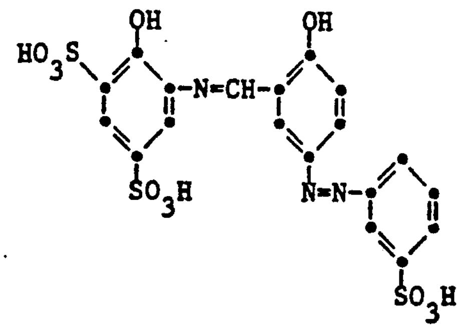 | braun-stichig olive |
| 25 | do | 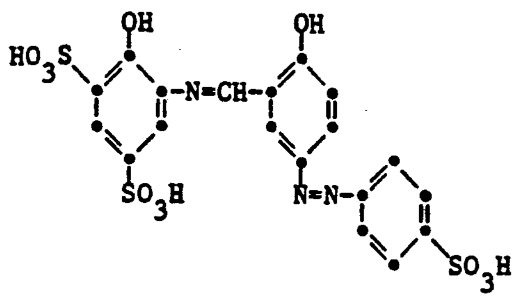 | braun-stichig olive |
| 26 | 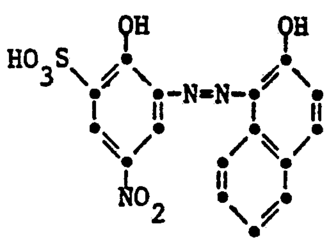 | 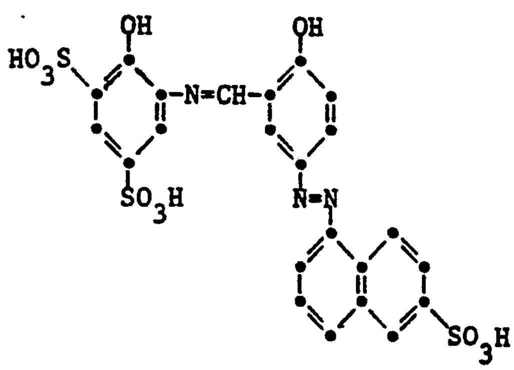 | braun |

| N° | Azofarbstoff | Azomethinfarbstoff | Nuance |
|---|---|---|---|
| 27 | 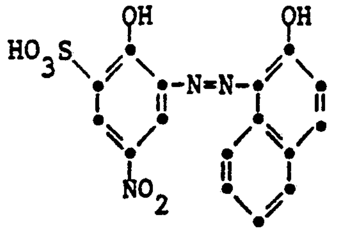 | 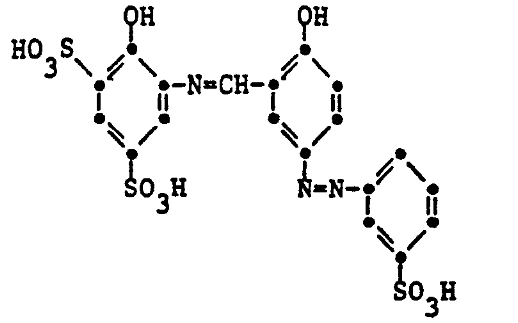 | braun |
| 28 | do | 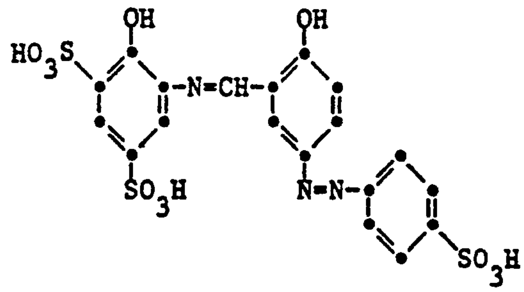 | braun |
| 29 | 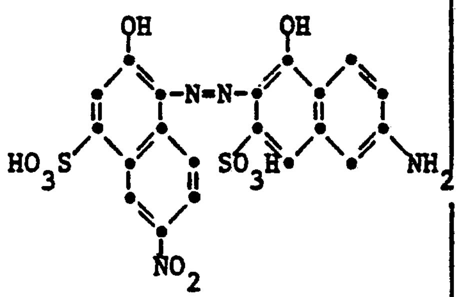 | 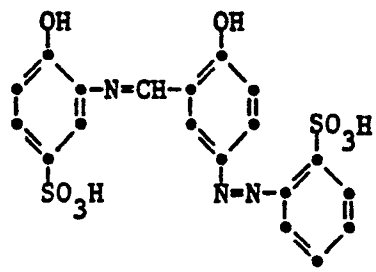 | olive |
| 30 | do | 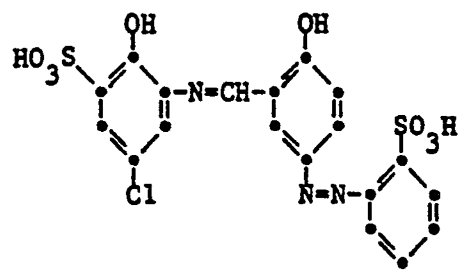 | olive |
| 31 | 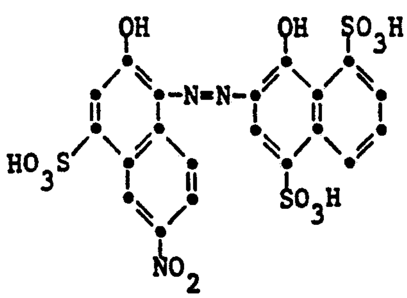 | 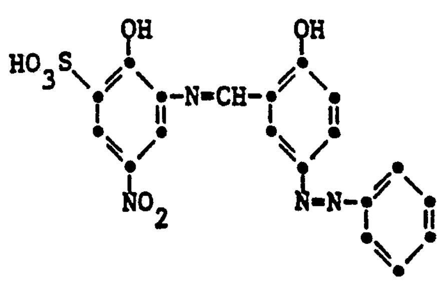 | olive |

| N° | Azofarbstoff | Azomethinfarbstoff | Nuance |
|---|---|---|---|
| 32 | 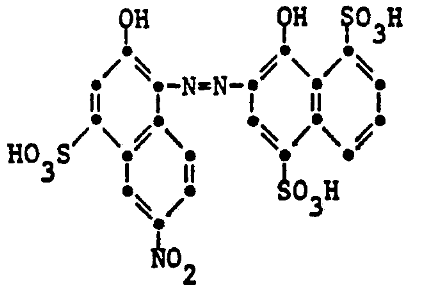 | 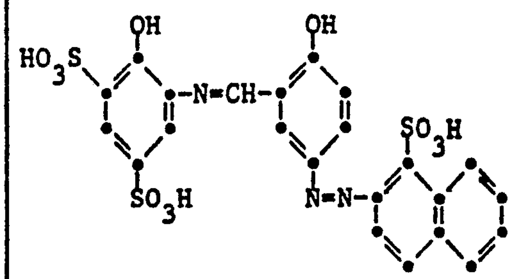 | olive |
| 33 | 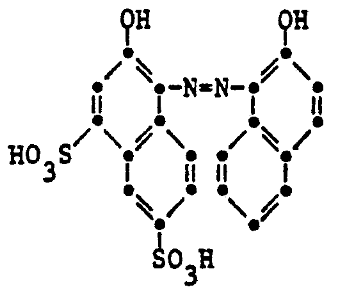 | 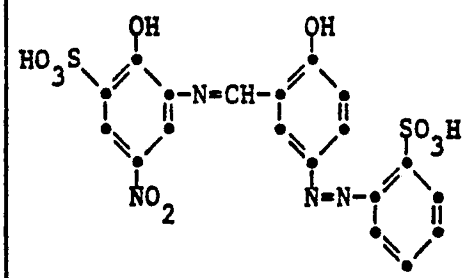 | olive |
| 34 | do | 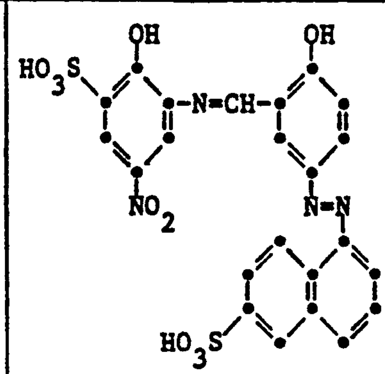 | olive |
| 35 | 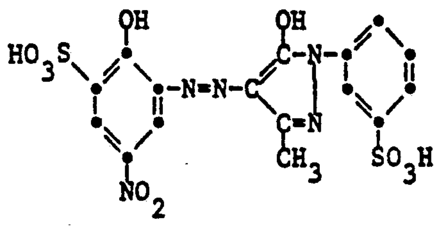 | 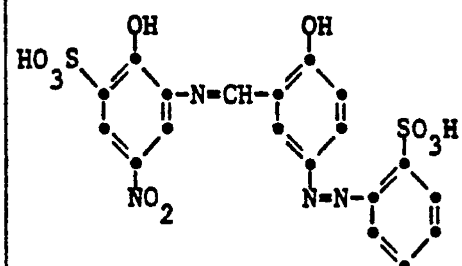 | orange |
| 36 | do | 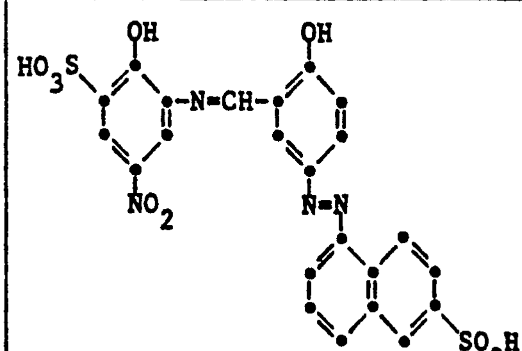 | orange |

| N° | Azofarbstoff | Azomethinfarbstoff | Nuance |
|---|---|---|---|
| 37 | 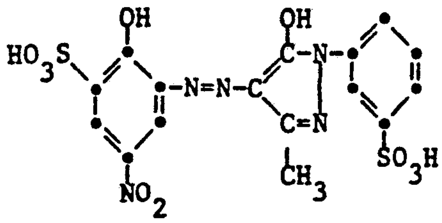 | 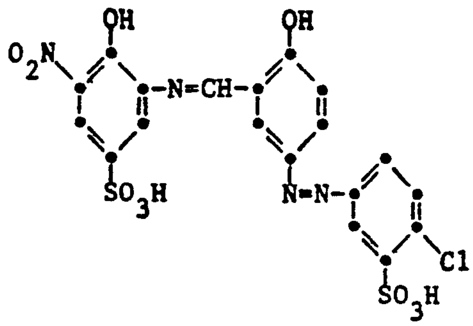 | orange |
| 38 | do | 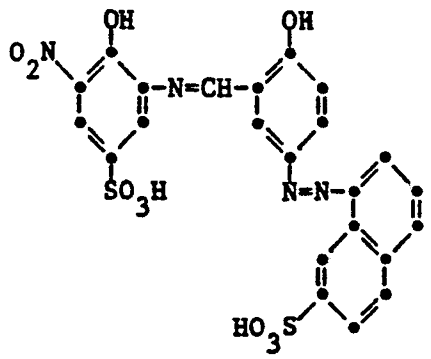 | braun-stichig orange |
| 39 | do | 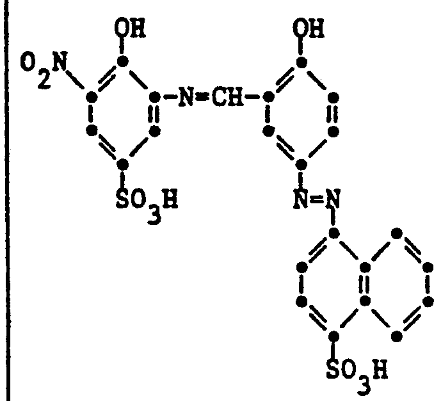 | braun-stichig orange |
| 40 | do | 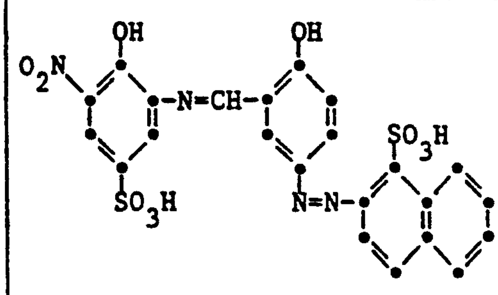 | braun-stichig orange |

| N° | Azofarbstoff | Azomethinfarbstoff | Nuance |
|---|---|---|---|
| 41 | 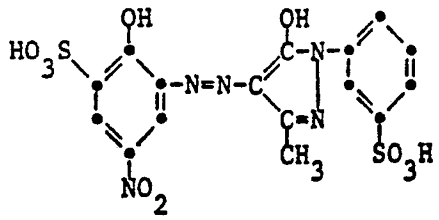 | 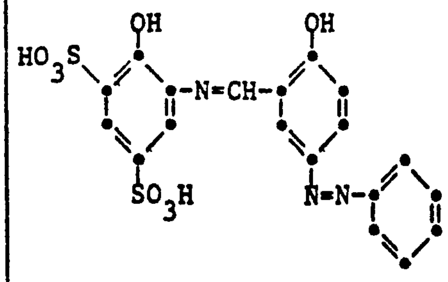 | orange |

**Färbevorschrift für Leder**

100 Teile Bekleidungsverloursleder (Trockengewicht) werden bei 50° in einer Lösung von 1000 Volumenteilen Wasser und 2 Teilen Ammoniak 24 %-ig während 2 Stunden aufgewalkt und anschliessend bei 60° in einer Lösung von 1000 Volumenteilen Wasser, 2 Teilen Ammoniak 24 %-ig und 6 Teilen Farbstoff aus Beispiel 1 während 1 Stunde gefärbt. Hierauf gibt man eine Lösung von 40 Volumenteilen Wasser und 4 Teilen Ameisensäure 85 %-ig zu und färbt noch weitere 30 Minuten. Dann wird das Leder gut gespült und gegebenenfalls noch mit 2 Teilen eines Dicyandiamidformaldehyd-Kondensationsproduktes während 30 Minuten bei 50° behandelt.

In gleicher Weise lassen sich andere Veloursleder sowie Handschuhleder färben.

Die so erhaltenen oliven Färbungen zeichnen sich durch gute Echtheiten und gute Deckvermögen aus.

**Patentansprüche**

1. 1 : 2 - Chromkomplexfarbstoffe der Formel I

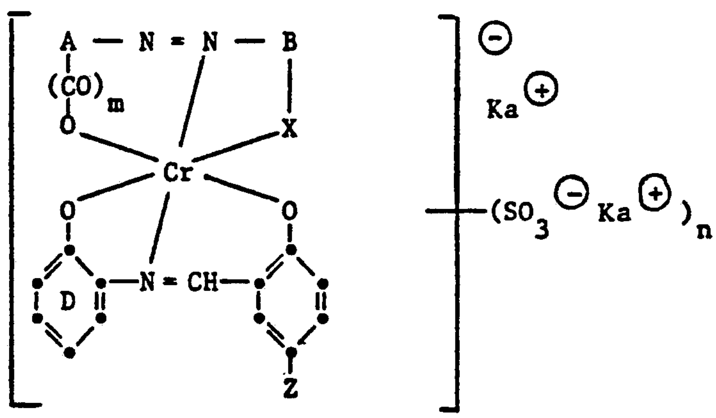

(I)

worin

A den Rest einer Diazokomponente der Benzol- oder Naphthalinreihe, welche die Hydroxy- oder Carboxygruppe in o-Stellung zur Azogruppe trägt,

B den Rest einer Kupplungskomponente, welche die Gruppe X in Nachbarstellung zur Azogruppe trägt,

X Sauerstoff oder einen Rest der Formel -NR-, wobei R Wasserstoff oder $C_1$-$C_4$-Alkyl bedeutet,

Z Wasserstoff oder eine Gruppe -N=N-Ar, wobei

Ar einen gegebenenfalls substituierten Arylrest, welcher höchstens eine Sulfogruppe trägt,

m 0 oder 1,

n 4, 5, 6 oder 7 und

$Ka^{\oplus}$ ein Kation bedeutet,

wobei der Ring D weitere Substituenten tragen kann.

2. Farbstoffe gemäss Anspruch 1, worin A den Rest eines 1-Hydroxy-2-aminobenzols, welcher gegebenenfalls durch Halogen, Nitro, Sulfo oder niedrigmolekulares Alkyl oder Alkoxy substituiert ist, oder

den Rest eines 1-Amino-2-hydroxy-4-sulfonaphthalins, welcher gegebenenfalls in 6-Stellung durch Halogen, wie Brom oder insbesondere Chlor, Nitro oder Sulfo substituiert ist, bedeutet.

3. Farbstoffe gemäss Ansprüchen 1 oder 2, worin B ein gegebenenfalls durch Amino und/oder Sulfo substituiertes 1- oder 2-Naphthol, 1- oder 2-Naphthylamin, gegebenenfalls substituiert durch Sulfo, p-Alkyl($C_1$-$C_6$)-phenol, 1-Phenyl-3-methyl-5-pyrazolon oder Acetessigsäureanilid darstellt, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann.

4. Farbstoffe gemäss einem der Ansprüche 1 bis 3, worin der Ring D einmal durch Sulfo substituiert ist und gegebenenfalls ausserdem durch eine weitere Sulfogruppe, Nitro, Chlor, Methyl oder Methoxy weitersubstituiert ist.

5. Farbstoffe gemäss einem der Ansprüche 1 bis 4, worin Z eine Gruppe -N=N-Ar ist, wobei Ar den Rest eines gegebenenfalls substituierten heterocyclischen oder carbocyclischen aromatischen Amins darstellt.

6. Farbstoffe gemäss Anspruch 5, worin Ar einen Benzol- oder Naphthalinrest darstellt, der eine Sulfogruppe trägt, wobei der Benzolrest gegebenenfalls weitersubstituiert ist durch Halogen, $C_1$-$C_4$-Alkyl, $C_1$-$C_4$-Alkoxy oder Nitro.

7. Farbstoffe gemäss einem der Ansprüche 1 bis 6, welche 4 oder 5 Sulfogruppen enthalten.

8. Farbstoffe gemäss einem der Ansprüche 1 bis 7, worin m 0 bedeutet.

9. Farbstoffe der Formel II

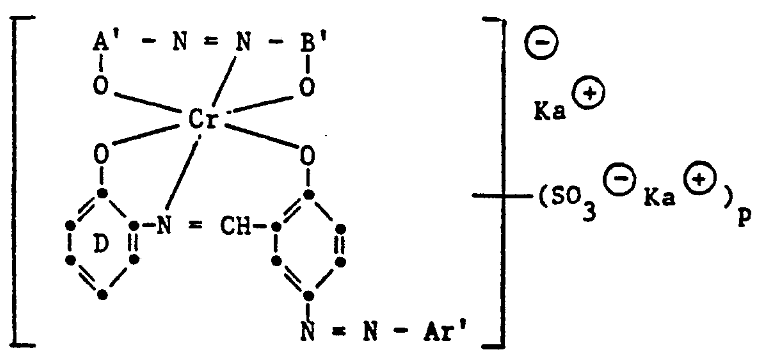

(II)

worin

A' den Rest eines 1-Hydroxy-2-aminobenzols welcher gegebenenfalls durch Halogen, Nitro, Sulfo oder niedrigmolekulares Alkyl oder Alkoxy substituiert ist, oder den Rest eines 1-Amino-2-hydroxy-4-sulfonaphthalins welcher gegebenenfalls in 6-Stellung durch Halogen, wie Brom oder insbesondere Chlor, Nitro oder Sulfo substituiert ist,

B' ein gegebenenfalls durch Amino und/oder Sulfo substituiertes 1- oder 2-Naphthol, 1- oder 2-Naphthylamin, gegebenenfalls substituiert durch Sulfo, p-Alkyl($C_1$-$C_6$)-phenol, 1-Phenyl-3-methyl-5-pyrazolon oder Acetessigsäureanilid darstellt, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann,

Ar' einen Naphthalinrest, der eine Sulfogruppe trägt, oder einen Benzolrest, der eine Sulfogruppe trägt und ausserdem gegebenenfalls weitersubstituiert ist durch Chlor, Methyl, Methoxy oder Nitro,

p 4 oder 5 und

$Ka^{\oplus}$ ein Kation bedeutet, wobei der Ring

D eine Sulfogruppe trägt und ausserdem gegebenenfalls weitersubstituiert ist durch eine weitere Sulfogruppe, Nitro, Chlor, Methyl oder Methoxy.

10. Verfahren zur Herstellung von Farbstoffen der Formel I, dadurch gekennzeichnet, dass man den 1 : 1 - Chromkomplex des Azofarbstoffs herstellt und diesen dann mit dem Arylazo-Azomethinfarbstoff oder vorzugsweise mit einem Gemisch des entsprechenden Amins und Aldehyds umsetzt.

11. Verwendung von Farbstoffen der Formel I zum Färben von Leder oder Pelzen.

## Claims

1. A 1 : 2 chromium complex dye of the formula I

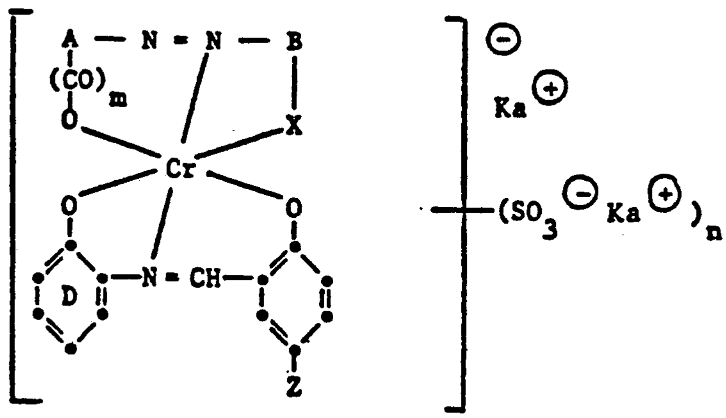

(I)

wherein

A is the radical of a diazo component of the benzene or naphthalene series, which carries the hydroxyl or carboxyl group in the o-position with respect to the azo group,

B is the radical of a coupling component which carries the group X in the position adjacent to the azo group,

X is oxygen, or a radical of the formula -NR-, in which R is hydrogen or $C_1$-$C_4$alkyl,

Z is hydrogen, or a group -N=N-Ar, in which

Ar is an unsubstituted or substituted aryl radical which carries at most one sulfo group,

m is 0 or 1,

n is 4, 5, 6 or 7, and

$Ka^{\oplus}$ is a cation,

where the ring D can carry further substituents.

2. A dye according to claim 1, wherein A is the radical of a 1-hydroxy-2-aminobenzene, which is unsubstituted or substituted by halogen, nitro, sulfo or lower alkyl or alkoxy, or is the radical of a 1-amino-2-hydroxy-4-sulfonaphthalene, which is unsubstituted or substituted in the 6-position by halogen, such as bromine or especially chlorine, or by nitro or sulfo.

3. A dye according to either claim 1 or 2, wherein B is a 1- or 2-naphthol which is unsubstituted or substituted by amino and/or sulfo; or a 1- or 2-naphthylamine, unsubstituted or substituted by sulfo; or is p-alkyl($C_1$-$C_6$)-phenol, 1-phenyl-3-methyl-5-pyrazolone or acetoacetic acid anilide, wherein the phenyl group in the two last-mentioned compounds can be substituted by $C_1$-$C_4$alkyl, $C_1$-$C_4$alkoxy, chlorine, nitro or sulfo.

4. A dye according to any one of claims 1 to 3, wherein the ring D is monosubstituted by sulfo, and can be further substituted by an additional sulfo group, or by nitro, chlorine, methyl or methoxy.

5. A dye according to any one of claims 1 to 4, wherein Z is a group -N=N-Ar, in which Ar is the radical of an unsubstituted or substituted, heterocyclic or carbocyclic, aromatic amine.

6. A dye according to claim 5, wherein Ar is a benzene or naphthalene radical, which carries one sulfo group, and the benzene radical can be further substituted by halogen, $C_1$-$C_4$alkyl, $C_1$-$C_4$alkoxy or nitro.

7. A dye according to any one of claims 1 to 6, which contains 4 or 5 sulfo groups.

8. A dye according to any one of claims 1 to 7, wherein m is 0.

9. A dye of the formula II

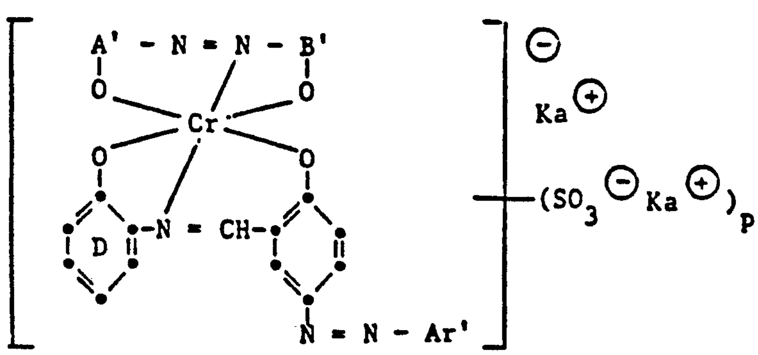

(II)

wherein

A' is the radical of a 1-hydroxy-2-aminobenzene, which is unsubstituted or substituted by halogen, nitro, sulfo or lower alkyl or alkoxy, or is the radical of a 1-amino-2-hydroxy-4-sulfonaphthalene, which is unsubstituted or substituted in the 6-position by halogen, such as bromine or particularly chlorine, or by nitro or sulfo,

B' is a 1- or 2-napthol which is unsubstituted or substituted by amino and/or sulfo, or a 1- or 2-napthylamine, unsubstituted or substituted by sulfo, or is p-alkyl($C_1$-$C_6$)-phenol, 1-phenyl-3-methyl-5-pyrazolone or acetoacetic acid anilide, where the phenyl group in the two last-mentioned compounds can be substituted by $C_1$-$C_4$alkyl, $C_1$-$C_4$alkoxy, chlorine, nitro or sulfo,
Ar' is a naphthalene radical which carries one sulfo group, or is a benzene radical which carries one sulfo group and which in addition can be further substituted by chlorine, methyl, methoxy or nitro,
p is 4 or 5, and
Ka⊕ is a cation, where the ring
D carries a sulfo group and can be further substituted by an additional sulfo group, or by nitro, chlorine, methyl or methoxy.

10. A process for producing a dye of the formula I, which process comprises producing the 1 : 1 chromium complex of the azo dye, and then reacting this with the arylazo-azomethine dye, or preferably with a mixture of the corresponding amine and aldehyde.

11. The use of a dye of the formula I for dyeing leather or furs.

**Revendications**

1. Colorants à complexe de chrome 1 : 2 de formule I

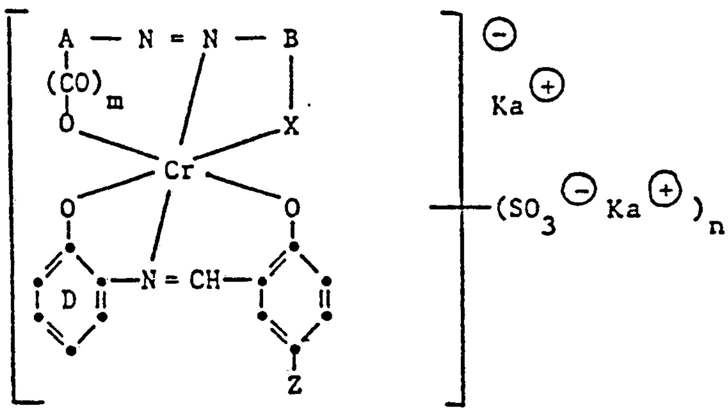

(I)

dans laquelle
A est le résidu d'un composant diazo de la série du benzène ou du naphtalène, qui porte le groupe hydroxy ou carboxy en position ortho par rapport au groupe azoïque,
B est le résidu d'un composant de copulation, qui porte le groupe X en position voisine par rapport au groupe azoïque,
X est un oxygène ou un résidu de formule -NR=, où R est un hydrogène ou un radical alkyle en $C_1$-$C_4$,
Z est un hydrogène ou un groupe -N=N-Ar, où
Ar est un radical aryle éventuellement substitué, lequel porte au plus un groupe sulfo,
m vaut 0 ou 1,
n vaut 4, 5, 6 ou 7, et
Ka⊕ est un cation,
le noyau D pouvant porter des substituants supplémentaires.

2. Colorants selon la revendication 1, où A est le résidu d'un 1-hydroxy-2-aminobenzène, lequel est éventuellement substitué par un radical halogéno, nitro, sulfo, ou alkyle ou alcoxy inférieur, ou encore le résidu d'un 1-amino-2-hydroxy-4-sulfonaphtalène, lequel est éventuellement substitué en position 6 par un halogène, comme le brome ou en particulier le chlore, ou un radical nitro ou sulfo.

3. Colorants selon les revendications 1 ou 2, où B est un 1- ou un 2-naphtol éventuellement substitué par un radical amino et/ou sulfo, une 1- ou 2-naphtylamine éventuellement substituée par un radical sulfo, un p-(alkyle en $C_1$-$C_6$)-phénol, la 1-phényl-3-méthyl-5-pyrazolone ou l'acétoacétanilide, le groupe phényle, dans ces deux derniers composés, pouvant être substitué par un radical alkyle en $C_1$-$C_4$, alcoxy en $C_1$-$C_4$, chloro, nitro ou sulfo.

4. Colorants selon l'une des revendications 1 à 3, où le noyau D est substitué une fois par un radical sulfo, et est éventuellement, de plus, substitué par un groupe supplémentaire sulfo, nitro, chloro, méthyle ou méthoxy.

5. Colorants selon l'une des revendications 1 à 4, où Z est un groupe -N=N-Ar, où Ar est le résidu d'une amine aromatique, hétérocyclique ou carbocyclique, éventuellement substituée.

6. Colorants selon la revendication 5, où Ar est un résidu benzénique ou naphtalénique, lequel porte un groupe sulfo, le résidu benzénique pouvant éventuellement être encore substitué par des radicaux halogéno, alkyle en $C_1$-$C_4$, alcoxy en $C_1$-$C_4$ ou nitro.

7. Colorants selon l'une des revendications 1 à 6, qui contiennent 4 ou 5 groupes sulfo.

6. Colorants selon l'une des revendications 1 à 7, où m vaut 0.

9. Colorants de formule II

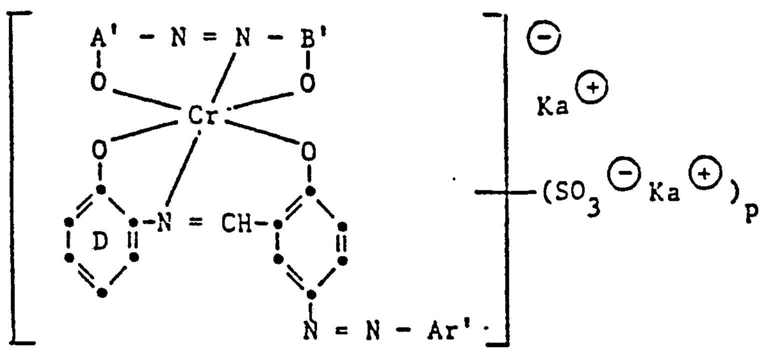

(II)

dans laquelle

A' est le résidu d'un 1-hydroxy-2-aminobenzène, lequel est éventuellement substitué par un radical halogéno, nitro, sulfo ou alkyle ou alcoxy inférieur, ou encore le résidu d'un 1-amino-2-hydroxy-4-sulfonaphtalène, lequel est éventuellement substitué en position 6 par un halogène, comme le brome ou en particulier le chlore, ou un radical nitro ou sulfo,

B' est le résidu d'un 1- ou d'un 2-naphtol, éventuellement substitué par un groupe amino et/ou sulfo, d'une 1- ou 2-naphtylamine, éventuellement substituée par un radical sulfo, d'un p-(alkyle en $C_1$-$C_6$)-phénol, de la 1-phényl-3-méthyl-5-pyrazolone ou de l'acétoacétanilide, le groupe phényle, dans ces deux derniers composés, pouvant être substitué par un radical alkyle en $C_1$-$C_4$, alcoxy en $C_1$-$C_4$, chloro, nitro ou sulfo,

Ar' est un résidu naphtalénique, portant un groupe sulfo, ou encore un résidu benzénique portant un groupe sulfo et étant par ailleurs éventuellement encore substitué par des radicaux chloro, méthyle, méthoxy ou nitro,

p vaut 4 ou 5, et

$Ka^{\oplus}$ est un cation,

le noyau D portant un groupe sulfo et pouvant par ailleurs éventuellement être encore substitué par un autre groupe sulfo ou un groupe nitro, chloro, méthyle ou méthoxy.

10. Procédé pour la préparation de colorants de formule I, caractérisé en ce qu'on prépare le complexe de chrome 1 : 1 du colorant azoïque, puis on fait réagir ce dernier sur le colorant arylazo-azométhine, ou de préférence sur un mélange de l'amine et de l'aldéhyde correspondants.

11. Utilisation de colorants de formule I pour la teinture du cuir ou des peaux.